# FASCICULE DE BREVET EUROPEEN

(11) **EP 3 212 678 B1**
(45) Date de publication et mention de la délivrance du brevet: **04.09.2019**
(21) Numéro de dépôt: 15786902.5
(22) Date de dépôt: 22.10.2015
(51) Int. Cl.: C08C 19/40, C08F 20/32, C08F 22/20, C08F 236/00, C08F 8/00, C08F 2/38, C08F 4/04, C08F 4/30, C08F 2/06, C08F 2/24, C08F 2/42, C08F 236/06, C08F 236/08, C08F 220/32, C08F 212/08

(54) **PROCÉDÉ DE SYNTHÈSE D'UN POLYMÈRE PORTEUR D'UN GROUPEMENT HYDROXYARYLE**
VERFAHREN ZUR SYNTHETISIERUNG EINES POLYMERS MIT EINER HYDROXYARYLGRUPPE
METHOD FOR SYNTHESIZING A POLYMER BEARING A HYDROXYARYL GROUP

(30) Priorité: 27.10.2014 FR 1460290
(43) Date de publication de la demande: 06.09.2017
(73) Titulaire: Compagnie Générale des Etablissements Michelin, 63000 Clermont-Ferrand (FR)
(72) Inventeur: RANNOUX, Claire, 1110 Morges (CH); MATMOUR, Rachid, 63040 Clermont-Ferrand Cedex 9 (FR); LOUBAT, Cédric, 34160 Castries (FR); BOUTEVIN, Gilles, 34160 Castries (FR)
(74) Mandataire: Gandon-Pain, Sylvie
(86) Numéro de dépôt international: PCT/EP2015/074512
(87) Numéro de publication internationale: WO 2016/066525

(56) Documents cités:
- US-A1- 2009 215 925
- DATABASE CA [Online] CHEMICAL ABSTRACTS SERVICE, COLUMBUS, OHIO, US; 12 mai 1984 (1984-05-12), NAKATSUKA, KAZUO ET AL: "Stabilizers for polypropylene", XP002742713, extrait de STN Database accession no. 1970:404824 -& JP S45 003787 B1 (MITSUBISHI RAYON CO., LTD.) 7 février 1970 (1970-02-07)
- DATABASE CA [Online] CHEMICAL ABSTRACTS SERVICE, COLUMBUS, OHIO, US; 12 mai 1984 (1984-05-12), NAKATSUKA, KAZUO ET AL: "Polypropylene stabilization", XP002742714, extrait de STN Database accession no. 1969:414138 -& JP S44 7348 B1 (MITSUBISHI RAYON CO., LTD.) 31 mars 1969 (1969-03-31)
- YVES BUCHMÜLLER ET AL: "Polymer-bound antioxidants in grafted membranes for fuel cells", JOURNAL OF MATERIALS CHEMISTRY A, vol. 2, no. 16, 4 février 2014 (2014-02-04), pages 5870-5882, XP055202979, ISSN: 2050-7488, DOI: 10.1039/c3ta15321e

## Description

La présente invention concerne des polymères, en particulier élastomères, porteurs d'au moins un groupement hydroxyaryle pendant ainsi que leur procédé de préparation. La présente invention concerne également les compositions de caoutchouc contenant de tels élastomères en vue notamment d'une amélioration de la dispersion des charges au sein des polymères.

Dans le domaine de la fabrication des pneumatiques et en particulier de la formulation des compositions de caoutchouc en contact avec le sol, appelées bandes de roulement, on recherche en permanence des moyens pour améliorer la dispersion des charges au sein des polymères et ainsi améliorer les propriétés de renforcement de la composition de caoutchouc les contenant. L'un des moyens pour parvenir à ce résultat est l'utilisation d'agents de couplage capables d'établir des interactions entre le polymère et la charge. Un autre moyen pour y parvenir est d'utiliser des polymères dont la structure est modifiée dans le but d'obtenir une bonne interaction entre le polymère ainsi modifié et la charge, qu'il s'agisse du noir de carbone ou d'une charge inorganique renforçante.

La modification de la structure des polymères peut se faire par introduction d'une fonction réactive vis-à-vis de la charge, à tout moment de sa synthèse par divers moyens connus. Ainsi, la fonction peut être introduite dans la structure du polymère au moment de l'amorçage d'une polymérisation anionique, lorsque l'amorceur de polymérisation est porteur de cette fonction. La fonction sera portée en extrémité de chaîne à l'issue de la synthèse. La fonction peut également être introduite en extrémité de chaîne d'un polymère par réaction d'un polymère vivant avec un agent de fonctionnalisation. La fonction peut également être portée par un des monomères polymérisés.

Ce sont ces approches de modification auxquelles se sont intéressés les auteurs des demandes WO2009/086490 A2 et WO2011/002994 A2 pour introduire au moins un groupement hydroxyaryle au sein d'un élastomère diénique afin d'améliorer la dispersibilité de la charge renforçante dans une matrice élastomère.

En effet, WO2009/086490 A2 décrit une méthode pour synthétiser des polymères fonctionnalisés avec au moins un groupement aryle substitué par au moins une fonction OR, R étant hydrolysable. Le groupement aryle substitué peut être introduit lors de l'étape d'amorçage, lors de la polymérisation anionique ou lors de la terminaison (en choisissant des amorceurs, des monomères ou des agents de fonctionnalisation adaptés). WO2011/002994 A2 décrit une méthode pour synthétiser des polymères portant des groupements hydroxyaryle pendants. Cette méthode consiste à copolymériser par voie radicalaire des monomères comprenant au moins un co-monomère porteur du groupement hydroxyaryle protégé.

Toutefois, ces méthodes de synthèse ne permettent d'introduire qu'une seule fonction dans la structure du polymère, lorsque la fonctionnalisation opère à l'amorçage ou la terminaison de la polymérisation, à moins d'utiliser des amorceurs au moins difonctionnels ou des agents de couplage ou d'étoilage. Cette modification du polymère impose en outre la nécessité de préparer au préalable des amorceurs de polymérisation ou des agents de fonctionnalisation dont les groupements hydroxyaryle sont protégés. Il en résulte également une étape de déprotection supplémentaire à la fin du procédé de synthèse.

Par ailleurs, les modes de synthèse par copolymérisation permettant d'introduire plusieurs groupements hydroxyaryle pendants, font appel à des co-monomères spécifiques portant le groupement hydroxyaryle. Là encore, la synthèse du polymère fonctionnel impose la nécessité de protéger les fonctions hydroxyle des groupements hydroxyaryle du co-monomère. La protection des fonctions hydroxyle du co-monomère rajoute une étape qui va de pair avec une autre étape à l'issue du procédé de synthèse, celle de déprotection des mêmes fonctions. De plus, les co-monomères porteurs d'un groupement hydroxyaryle sont peu, voire pas disponibles.

Pour avoir un réel bénéfice lié à la réactivité des groupements hydroxyaryle d'un polymère les comprenant en vue d'une modification significative de ses propriétés de renforcement, il apparait souhaitable d'avoir plusieurs groupements hydroxyaryle pendants.

Par conséquent, le problème technique qui se pose par rapport à l'art antérieur est de fournir un procédé qui permet la synthèse de polymère, notamment diénique, portant un ou plusieurs groupements hydroxyaryle pendants qui pallie les inconvénients des procédés antérieurs.

La présente invention permet de résoudre ce problème en proposant un procédé de synthèse d'un polymère porteur d'un ou plusieurs groupements hydroxyaryle, lequel procédé permet d'introduire de manière simple et contrôlée un ou plusieurs groupements hydroxyaryle pendants, sans faire appel à des co-monomères porteurs d'un groupement hydroxyaryle qui ont notamment pour inconvénients de requérir des étapes supplémentaires de protection et déprotection de la fonction hydroxyle, et qui ne sont pas ou peu disponibles commercialement.

Ainsi, l'invention a pour objet un procédé de synthèse d'un polymère porteur d'au moins un groupement hydroxyaryle pendant, lequel procédé étant tel que défini dans la revendication 1.

L'invention concerne aussi un pneumatique tel que défini dans la revendication 15.

### I. DESCRIPTION DETAILLEE DE L'INVENTION :

Dans la présente description, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Dans la présente description, on entend par « au moins un groupement » un ou plusieurs groupements.

Dans la présente description, on entend par « au moins une fonction » une ou plusieurs fonctions.

Dans la présente description, on entend par l'expression "groupement hydroxyaryle" en référence au groupement porté par le composé nucléophile ou par le polymère, un groupement aryle portant deux fonctions hydroxyle vicinales directement liées au noyau benzénique.

Dans la présente description, l'expression « groupement pendant » s'entend selon la définition donnée par IUPAC, PAC, 1996, 68, 2287.

L'invention a donc pour objet un procédé de synthèse d'un polymère porteur d'au moins un groupement hydroxyaryle pendant, lequel procédé comprend la réaction d'un polymère de départ portant au moins une fonction époxyde pendante avec un composé nucléophile porteur du groupement hydroxyaryle.

On entend par « fonction époxyde » le cycle à 3 membres formé par un atome d'oxygène et deux atomes de carbone, les atomes de carbone du cycle pouvant être substitués.

Selon l'un quelconque des modes de réalisation de l'invention, la fonction époxyde est de préférence représentée par la formule suivante :

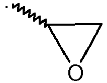

Dans la suite de l'exposé de l'invention, la dénomination « la fonction époxyde » est utilisée pour désigner l'au moins une fonction époxyde, c'est-à-dire une ou plusieurs fonctions époxyde.

Dans la suite de l'exposé de l'invention, la dénomination « le groupement hydroxyaryle » est utilisée pour désigner l'au moins un groupement hydroxyaryle, c'est-à-dire un ou plusieurs groupements hydroxyaryles.

Dans la suite de l'exposé de l'invention, la dénomination « le polymère de départ » désigne le polymère portant la fonction époxyde pendante et utile aux besoins du procédé de synthèse conforme à l'invention.

Selon l'un quelconque des modes de réalisation de l'invention, de préférence la fonction époxyde est attachée à la chaîne polymère ailleurs qu'en extrémité de la chaîne polymère.

Selon l'un quelconque des modes de réalisation de l'invention, le polymère de départ porte de préférence plusieurs fonctions époxyde pendantes.

Selon l'un quelconque des modes de réalisation de l'invention, le polymère de départ peut être un élastomère, un polymère liquide ou un polymère thermoplastique, qu'il soit bloc, alterné ou statistique.

Dans la présente demande, on entend par polymère liquide un polymère qui à température ambiante (23°C) prend la forme du récipient qui le contient mais dont le volume est déterminé.

Une caractéristique essentielle du polymère de départ utile aux besoins du procédé de synthèse conforme à l'invention, est qu'il est porteur de la fonction époxyde pendante. L'introduction de fonction époxyde pendante dans une chaîne polymère peut être facilement accessible en une étape de synthèse. Il existe deux principes de synthèse différents. La fonction époxyde peut être apportée par au moins un des monomères constitutifs du polymère, ou bien la fonction époxyde peut être obtenue par la modification post-polymérisation du polymère. De tels polymères portant la fonction époxyde pendante et leurs procédés d'obtention sont bien connus de l'homme du métier et pour certains disponibles commercialement.

Selon une première variante de l'invention, le polymère de départ est un polymère d'au moins un premier monomère portant la fonction époxyde, de préférence une fonction époxyde. Il est bien entendu dans la présente invention que le premier monomère peut être un mélange de monomères portant la fonction époxyde, de préférence une fonction époxyde.

Selon la première variante de l'invention, la synthèse du polymère de départ s'effectue de préférence par copolymérisation radicalaire, selon des procédés classiques et connus de l'homme du métier, tels qu'en émulsion, en solution, en suspension ou en masse.

La polymérisation radicalaire est conduite à des températures variant de -10°C à 200°C, de préférence de 0 à 100°C, la température étant choisie par l'homme du métier en tenant compte notamment de la réactivité du milieu de polymérisation et de sa concentration.

L'amorceur de polymérisation peut être tout amorceur de polymérisation radicalaire conventionnel, notamment à titre d'exemple un peroxyde organique tel que le peroxyde de benzoyle, peroxyde de lauroyle, hydroperoxyde de tert-butyle, hydroperoxyde de cumyle, hydroperoxyde de para-menthyle, peroxyde de di-ter-butyle, peroxyde de dicumyle. Par ailleurs, les amorceurs de polymérisation radicalaire peuvent inclure également les peracides et leurs esters tels que l'acide peracétique et le persulfate de potassium. Chaque amorceur de polymérisation radicalaire peut être utilisé seul ou en combinaison avec au moins un autre amorceur de polymérisation radicalaire.

A titre de polymérisation radicalaire, on peut aussi recourir à la polymérisation radicalaire contrôlée qui permet un degré élevé de contrôle de la macrostructure et de la microstructure du polymère. La polymérisation radicalaire contrôlée est connue de l'homme de l'art et décrite dans de nombreux ouvrages. Parmi les polymérisations radicalaires contrôlées, on dénombre par exemple la polymérisation radicalaire par transfert d'atomes (Atom Transfer Radical en anglais, ATRP), la polymérisation radicalaire contrôlée par les nitroxides (Nitroxide Mediated Polymerization, NMP), la polymérisation radicalaire contrôlée par transfert de chaîne réversible par addition-fragmentation (Reversible Addition Fragmentation Transfer, RAFT).

Dans le milieu réactionnel de la polymérisation radicalaire, des agents de transfert comme les mercaptans, en particulier le tert-dodécylmercaptan, le n-dodécylmercaptan ou comme le tétrachlorure de carbone ou encore le di- ou triterpène peuvent également être utilisés seuls ou en combinaison.

Pour une polymérisation radicalaire conduite en émulsion, les tensioactifs employés dans la polymérisation en émulsion peuvent être anioniques, cationiques, non ioniques ou des espèces amphotères. Ils peuvent être utilisés seuls ou en combinaison.

Pour une polymérisation radicalaire conduite en suspension, les stabilisants employés dans la polymérisation en suspension peuvent être par exemple et de manière non exhaustive le poly(alcool vinylique), le poly(acrylate de sodium), l'hydroxyéthycellulose.

Pour une polymérisation radicalaire, qu'elle soit en solution, en suspension, en masse ou en émulsion, les monomères, l'amorceur de polymérisation ainsi que les autres constituants du milieu de polymérisation peuvent être introduits dans le réacteur en une seule charge au début de la polymérisation ou de manière continue ou séquencée tout au long de la polymérisation.

La polymérisation radicalaire est réalisée de manière conventionnelle sous atmosphère inerte, par exemple sous azote ou sous argon. La durée typique de la polymérisation est comprise entre 15 min et 48h, plus communément entre 1 h et 24 h.

Selon un mode de réalisation particulier de la première variante, les unités monomères du premier monomère portant la fonction époxyde sont les seules unités monomères constitutives du polymère de départ.

Selon un autre mode de réalisation de la première variante de l'invention, le polymère de départ est un polymère d'au moins un premier monomère portant la fonction époxyde et d'au moins un second monomère.

Le second monomère peut être un monomère vinylique choisi parmi l'éthylène, les α-oléfines, le (méth)acrylonitrile, les (méth)acrylates, les ester vinyliques d'acides carboxyliques, l'alcool vinylique, les éthers vinyliques et les mélanges de ces monomères.

A titre d'α-oléfines conviennent par exemple les α-monooléfines, les diènes conjugués et les diènes non-conjugués.

A titre de α-monooléfines, conviennent par exemple les alcènes et les composés vinylaromatiques (vinylarènes). A titre d'alcènes, on peut citer ceux ayant de 3 à 12 atomes de carbone, en particulier le propylène.

A titre de composés vinylaromatiques, on peut citer ceux ayant de 8 à 20 atomes de carbone, comme par exemple le styrène, l'ortho-, méta-, para-méthylstyrène, para-tertiobutylstyrène, alpha-méthylstyrène, le mélange commercial "vinyle-toluène", vinylmésitylène, le divinylbenzène et le vinylnaphtalène.

A titre de diènes conjugués conviennent par exemple ceux ayant de 4 à 15 atomes de carbone, comme par exemple le 1,3-butadiène, le 2-méthyl-1,3-butadiène (isoprène), les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène.

A titre de diènes non conjugués conviennent par exemple ceux ayant de 5 à 12 atomes de carbone, tel que notamment l'hexadiène-1,4, le vinyle norbornène, l'éthylidène norbornène, le norbornadiène et le dicyclopentadiène.

A titre de (méth)acrylonitrile, conviennent l'acrylonitrile et le méthacrylonitrile.

A titre de (méth)acrylates, c'est à dire acrylates ou méthacrylates, on peut citer les esters acryliques dérivés de l'acide acrylique ou de l'acide méthacrylique avec des alcools ayant 1 à 12 atomes de carbone, comme par exemple l'acrylate de méthyle, l'acrylate d'éthyle, l'acrylate de propyle, l'acrylate de n-butyle, l'acrylate d'isobutyle, l'acrylate d'ethyl-2-hexyle, le méthacrylate de méthyle, le méthacrylate d'éthyle, le méthacrylate de n-butyle et le méthacrylate d'isobutyle.

A titre d'esters vinyliques d'acides carboxyliques, on peut citer par exemple l'acétate de vinyle et le propionate de vinyle, préférentiellement l'acétate de vinyle.

A titre d'éthers vinyliques conviennent par exemple ceux dont le groupement R de la fonction éther OR contient 1 à 6 atomes de carbone.

Selon un mode de réalisation préférentiel de la première variante de l'invention, le second monomère est l'éthylène, le 1,3-butadiène, l'isoprène, un mélange de butadiène et d'isoprène ou le styrène.

Selon un mode de réalisation particulier de la première variante de l'invention, le polymère de départ est un polymère d'au moins un premier monomère portant la fonction époxyde, d'éthylène ou d'une α-oléfine et d'un troisième monomère. Le troisième monomère est choisi parmi les monomères vinyliques tels que définis précédemment, sachant qu'il est distinct du second monomère. De préférence, le troisième monomère est un vinylester, en particulier l'acétate de vinyle, ou un alkylméthacrylate, l'alkyle ayant de 1 à 12 atomes de carbone, ou encore un composé vinylaromatique, en particulier le styrène.

Selon l'un quelconque des modes de réalisation de la première variante de l'invention, le premier monomère portant la fonction époxyde est de préférence un monomère portant une fonction époxyde, de manière plus préférentielle un groupement glycidyle, de manière encore plus préférentielle un ester de glycidyle d'un acide carboxylique α,β-insaturé, mieux un ester de glycidyle de l'acide méthacrylique, de l'acide acrylique ou de l'acide itaconique.

Selon un mode de réalisation particulièrement préférentiel de la première variante de l'invention, le polymère de départ est un terpolymère d'éthylène ou α-oléfine, d'acétate de vinyle et de (méth)acrylate de glycidyle ou un terpolymère d'éthylène ou α-oléfine, d'un (méth)acrylate d'alkyle, l'alkyle ayant 1 à 17 atomes de carbone et de (méth)acrylate de glycidyle. Comme terpolymère convient tout particulièrement le terpolymère d'éthylène, d'acétate de vinyle et de méthacrylate de glycidyle dont la synthèse est par exemple décrite dans la demande de brevet WO 2013192159.

A titre d'exemple de copolymères ou de terpolymères utiles aux besoins du procédé de synthèse conforme à l'invention en tant que polymère de départ, on peut citer par exemple les terpolymères commerciaux « Lotader » d'Arkema, en particulier le « Lotader AX8840 » et le « Lotader AX8900 ».

Selon une seconde variante de l'invention, le polymère de départ est obtenu par la modification post-polymérisation d'un polymère insaturé par un composé époxydé. On entend dans la présente demande par polymère insaturé un polymère qui comporte des doubles liaisons carbone-carbone. Le principe de la modification du polymère insaturé repose sur la réaction du composé époxydé avec au moins une double liaison carbone-carbone du polymère insaturé. Ces composés époxydés comprennent outre la fonction époxyde, un groupement réactif vis-à-vis d'une double liaison carbone-carbone par le biais de réactions connues de l'homme de l'art.

Comme réaction connue, on peut citer la réaction de Diels-Alder, le composé époxydé pouvant être le diène ou le diénophile. Dans le premier cas où le composé époxydé est le diène, le composé époxydé peut être un diène porteur d'une fonction époxyde. Dans le second cas où le composé époxydé diénophile est une monooléfine, le polymère insaturé à modifier contient des doubles liaisons carbone-carbone conjuguées. Des polymères contenant des doubles liaisons carbone-carbone conjuguées peuvent être obtenus par la polymérisation de monomères triènes, en particulier l'alloocimène, comme cela est décrit par exemple dans la demande EP 2 423 239 A1.

On peut également citer la réaction d'hydrosilylation d'un hydrogénosilane porteur d'une fonction époxyde, en particulier le (3-glycidoxypropyl)tétraméthyldisiloxane, comme cela est par exemple décrit dans la demande de brevet FR-A-3 015 488.

On peut aussi citer la réaction de greffage radicalaire d'un thiol, le thiol portant une fonction époxyde, comme cela est décrit par exemple dans les publications suivantes : Angew. Chem. Int. Ed. 2010, 49, 1540-1573 ; J. Polym. Sci.: Part A: Polym. Chem. 2004, 42, 5301-5338 ; Polym. Chem., 2010, 1, 17-36 ; FR-A-3 000 073.

Le polymère insaturé peut avoir toute microstructure. Le polymère insaturé peut être par exemple à blocs, statistiques, séquencés, microséquencés, et être préparé en dispersion, en émulsion ou en solution ; il peut être couplé, étoilé ou encore fonctionnalisé avec un agent de couplage, d'étoilage ou de fonctionnalisation. Le polymère insaturé, en particulier diénique, peut être obtenu selon des techniques classiques de polymérisation (polymérisation anionique, polymérisation par catalyse de coordination, polymérisation radicalaire...), bien connues de l'homme du métier.

Le polymère insaturé selon l'invention peut être choisi dans le groupe constitué par les polymères thermoplastiques, les polymères liquides, les élastomères et les mélanges de ces derniers.

Le polymère insaturé est préférentiellement un élastomère, plus préférentiellement un élastomère diénique.

Par élastomère diénique, on rappelle que doit être entendu un élastomère qui est issu au moins en partie (i.e. un homopolymère ou un copolymère) de monomères diènes (monomères porteurs de deux doubles liaisons carbone-carbone, conjuguées ou non). On entend plus particulièrement par élastomère diénique :
(a) tout homopolymère d'un monomère diène conjugué ayant de 4 à 12 atomes de carbone;
(b) tout copolymère d'un monomère diène conjugué, en particulier tout copolymère d'un monomère diène conjugué et d'une monooléfine telle que l'éthylène ou une α-monooléfine, le monomère diène conjugué ayant de 4 à 12 atomes de carbone;
(c) tout homopolymère d'un monomère diène non conjugué ayant de 5 à 12 atomes de carbone;
(d) tout copolymère d'un monomère diène non conjugué, en particulier tout copolymère d'un monomère diène non conjugué et d'une monooléfine telle que l'éthylène ou une α-monooléfine, le monomère diène non conjugué ayant de 5 à 12 atomes de carbone ;
(e) un mélange des polymères définis en (a) à (d).

Selon un mode de réalisation préférentiel de la seconde variante de l'invention, le polymère insaturé est un élastomère diénique choisi dans le groupe constitué par les polybutadiènes, les polyisoprènes, les copolymères de butadiène, les copolymères d'isoprène et leurs mélanges.

Le taux molaire de fonction époxyde pendante dans le polymère de départ utile pour les besoins du procédé de synthèse conforme à l'invention peut varier dans une large part et est ajustée selon les propriétés recherchées du polymère conforme à l'invention, notamment selon l'usage qu'il en sera fait. Il est exprimé par rapport à 100 moles d'unités monomères constituant le polymère de départ. Quand le taux molaire de fonction époxyde pendante dans le polymère de départ est inférieur à 0,1 et que le composé nucléophile porte un groupement hydroxyaryle, le taux molaire maximum de groupement hydroxyaryle pendant sur le polymère conforme à l'invention sera au plus de 0,1 mole pour 100 moles d'unités monomères, ce qui implique que l'effet technique visé d'amélioration de la dispersion d'une charge renforçante au sein d'un polymère modifié risque d'être insuffisant. C'est pourquoi le taux molaire de fonction époxyde pendante dans le polymère de départ est avantageusement d'au moins 0,1. De préférence il varie dans un domaine allant de 0,1 à 100 plus préférentiellement de 0,1 à 80 encore plus préférentiellement de 0,1 à 50, plus particulièrement de 0,1 à 20.

L'autre composé essentiel du procédé de synthèse de l'invention est un composé nucléophile. Le composé nucléophile est un composé porteur à la fois du groupement hydroxyaryle et d'une fonction nucléophile choisie dans le groupe constitué par la fonction amine primaire, la fonction amine secondaire, la fonction acide carboxylique et leur forme ionique.

Le groupement hydroxyaryle est un groupe aryle porteur de deux fonctions hydroxyle vicinales directement liées au noyau benzénique. Par deux fonctions vicinales, on entend deux fonctions qui sont portées par des carbones du noyau benzénique qui sont adjacents. Autrement dit, une fonction hydroxyle est en position ortho par rapport à l'autre fonction hydroxyle.

On entend par fonction amine primaire le groupement NH₂, typiquement présent dans une amine primaire.

On entend par fonction amine secondaire le groupement NH, typiquement présent dans une amine secondaire.

On entend par fonction acide carboxylique le groupement COOH, typiquement présent dans un acide carboxylique.

La fonction nucléophile est susceptible de réagir avec la fonction époxyde du polymère de départ par ouverture du cycle époxyde. Le composé nucléophile répond à la formule (I) suivante:

A-B-X (I)

dans laquelle :
A représente une fonction nucléophile choisie dans le groupe constitué par la fonction amine primaire, la fonction amine secondaire, la fonction acide carboxylique et leur forme ionique, de préférence la fonction acide carboxylique ou sa forme ionique,
B est un "espaceur" représentant un atome ou un groupe d'atomes formant une liaison entre A et X.

Le groupement B permet de relier le groupement A et le groupement X. Le groupement B peut être une chaîne hydrocarbonée divalente, linéaire, ramifiée ou cyclique. Ladite chaîne peut éventuellement être substituée. Ladite chaîne peut également comporter au moins un hétéroatome, pour autant qu'elle ne constitue pas alors un groupement nucléophile réactif vis-à-vis de la fonction époxyde. De préférence, le groupement B est une chaîne hydrocarbonée, linéaire ou ramifiée, en C₁-C₂₄, de manière plus préférentielle en C₁-C₁₀, de manière encore plus préférentielle une chaîne alkylène linéaire en C₁-C₆, notamment en C₂.

X- représente 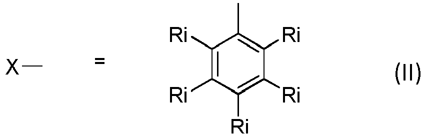 dans laquelle, les Ri, identiques ou différents, représentent un atome d'hydrogène ou une fonction hydroxyle, deux Ri représentant une fonction hydroxyle.

Le groupe aryle X est substitué par deux fonctions hydroxyle vicinales.

Selon un autre mode de réalisation, le groupement X- répond de préférence à la formule (III) :

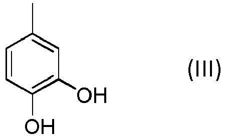

Selon des variantes particulièrement avantageuses de l'invention, le composé nucléophile répond à la formule A-B-X pour laquelle l'une quelconque des conditions suivantes est remplie:
a) A représente la fonction acide carboxylique ou sa forme ionique
b) B représente un groupement hydrocarboné divalent en C₁-C₆,
c) X représente un groupement aryle substitué sur deux atomes de carbone consécutifs par deux fonctions hydroxyle.

Selon ces variantes, le composé nucléophile répond plus préférentiellement à la formule (IV):

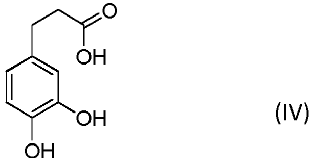

La réaction du polymère de départ avec le composé nucléophile s'effectue généralement dans des conditions classiques des réactions d'ouverture de cycle époxyde, en masse ou en solution, en particulier au reflux du solvant de la réaction. On utilise généralement un solvant polaire, de préférence un éther tel que le dioxane.

L'introduction de groupement hydroxyaryle par une réaction post-polymérisation sur un polymère portant au moins une fonction époxyde pendante permet d'éviter les étapes de protection et déprotection nécessaires lorsqu'on copolymérise à partir d'un monomère portant un groupement hydroxyaryle. En outre, le rendement élevé, qui peut atteindre au moins 90% de l'ouverture des cycles époxyde permet un parfait contrôle du taux de groupement hydroxyaryle introduit le long de la chaîne.

Selon un mode de réalisation préférentiel de l'invention, le procédé conforme à l'invention conduit à la synthèse d'un polymère conforme à l'invention qui contient au moins un groupement hydroxyaryle pendant, de préférence plusieurs groupements hydroxyaryle pendants.

Le polymère obtenu par le procédé selon l'invention comprend d'une part une chaîne principale dérivée d'un polymère portant la fonction époxyde pendante, d'autre part au moins un groupement latéral porteur du groupement hydroxyaryle, lequel groupement hydroxyaryle est relié à la chaîne principale par l'intermédiaire de groupement divalent résultant de la réaction de la fonction époxyde avec le composé nucléophile.

Selon l'un quelconque des modes de réalisation de l'invention, le taux de groupement hydroxyaryle pendant dans le polymère conforme à l'invention va de préférence de 0,1 à 100, plus préférentiellement de 0,1 à 80, encore plus préférentiellement de 0,1 à 50, plus particulièrement de 0,1 à 20 moles pour 100 moles d'unités monomères constituant le polymère conforme à l'invention.

Selon l'un quelconque des modes de réalisation de l'invention, la chaîne principale du polymère obtenu par le procédé selon l'invention contient de préférence des unités monomères choisis dans le groupe constitué par les unités éthylène, les unités α-oléfine, les unités (méth)acrylonitrile, les unités (méth)acrylate, les unités ester vinylique d'acides carboxyliques, les unités alcool vinylique et les unités éther vinylique. A titre d'unités α-oléfine, on peut citer les α-monooléfines comme les composés vinylaromatiques comme le styrène, les diènes conjugués comme le 1,3-butadiène et l'isoprène, les diènes non-conjugués.

Selon l'un quelconque des modes de réalisation de l'invention, le polymère obtenu par le procédé selon l'invention répond de préférence à la formule (V):

P[-G]i (V)

dans laquelle :
- P représente la chaîne polymère dérivée du polymère portant la fonction époxyde pendante,
- G représente le groupement latéral porteur du groupement hydroxyaryle, et
- i représente le nombre de groupement hydroxyaryle pendant.

L'homme du métier comprendra que la chaîne principale du polymère obtenu par le procédé selon l'invention peut comprendre des fonctions époxyde pendantes résiduelles. Le taux de ces fonctions époxyde pendantes résiduelles dépend notamment de la stoechiométrie des réactifs, en particulier de la quantité introduite dans le milieu réactionnel de composé nucléophile relative au taux molaire de fonction époxyde présente sur le polymère de départ. i dépend du rendement de la réaction de greffage, du taux molaire de fonctions époxyde dans le polymère de départ, ainsi que de la quantité de composé nucléophile. C'est un nombre au moins égal à 1, il est de préférence strictement supérieur à 1.

Selon l'un quelconque des modes de réalisation de l'invention, G est représenté de préférence par la formule (VI):

-D-B-X (VI)

dans laquelle :
D représente un groupement divalent résultant de la réaction de la fonction époxyde pendante du polymère de départ avec la fonction nucléophile A du composé nucléophile;
A, B et X sont tels que décrit plus haut.

Ainsi, D peut être le groupement divalent résultant de la réaction de la fonction époxyde pendante avec une fonction nucléophile choisie dans le groupe constitué par la fonction amine primaire, la fonction amine secondaire, la fonction acide carboxylique et leur forme ionique, de préférence avec la fonction acide carboxylique ou sa forme ionique.

Parmi ces variantes, D peut être le groupement divalent résultant de la réaction de la fonction époxyde avec une fonction nucléophile choisie dans le groupe constitué par la fonction amine primaire, la fonction amine secondaire, la fonction acide carboxylique, et leur forme ionique, de préférence avec la fonction acide carboxylique ou sa forme ionique. Plus particulièrement, D peut être le groupement divalent résultant de la réaction de la fonction époxyde d'une unité monomère ester de glycidyle, préférentiellement (méth)acrylate de glycidyle, avec une fonction nucléophile choisie dans le groupe constitué par la fonction amine primaire, la fonction amine secondaire, la fonction acide carboxylique, et leur forme ionique, de préférence avec la fonction acide carboxylique ou sa forme ionique.

Les polymères porteurs d'un ou plusieurs groupements hydroxyaryle pendants obtenus selon le procédé de l'invention, peuvent être utilisés en tant que tel ou en mélanges avec un ou plusieurs autres composés. La présence de groupements hydroxyaryle pendants permet d'envisager une utilisation dans des applications similaires à celles des polymères modifiés en général, et des polymères porteurs de groupements hydroxyaryle en particulier. Par exemple, il est connu pour l'optimisation des interactions entre un élastomère diénique et une charge renforçante au sein d'une composition de caoutchouc, de modifier la nature des élastomères diéniques afin d'y introduire des groupes fonctionnels. Ainsi, la structure particulière du polymère porteur d'un ou plusieurs groupements hydroxyaryle pendants obtenu selon le procédé de l'invention permet d'envisager son utilisation dans la fabrication de divers produits à base de caoutchouc renforcé lorsque le polymère est un élastomère diénique, notamment en vue d'améliorer la dispersion de la charge au sein de la matrice élastomère.

L'élastomère diénique portant un ou plusieurs groupements hydroxyaryle pendants obtenu selon le procédé de l'invention est alors plus particulièrement choisi parmi les polybutadiènes, les polyisoprènes, les copolymères de butadiène, les copolymères d'isoprène, ainsi que leurs mélanges. A titre d'élastomère diénique conviennent par exemple les SBR, les BIR, les SIR, les SBIR, les copolymères de butadiène et d'ester d'acide (méth)acrylique, les copolymères d'isoprène et d'ester d'acide (méth)acrylique, les copolymères de butadiène, de styrène et d'ester d'acide (méth)acrylique, les copolymères d'isoprène, de styrène et d'ester d'acide (méth)acrylique.

La composition de caoutchouc a pour caractéristique de comprendre une charge renforçante par exemple du noir de carbone, une charge renforçante autre que du noir de carbone, notamment de type siliceuse telle que de la silice à laquelle est associé de manière connue un agent de couplage, ou encore un mélange de ces deux types de charge.

Selon des variantes de l'invention, la composition peut, outre le polymère comprendre au moins un élastomère diénique conventionnel. Comme élastomère diénique conventionnel conviennent plus particulièrement le caoutchouc naturel, les polybutadiènes (BR), les copolymères de butadiène, les polyisoprènes (IR), les copolymères d'isoprène et les mélanges de ces élastomères. De tels copolymères sont plus préférentiellement choisis dans le groupe constitué par les copolymères de butadiène et d'un monomère vinylaromatique, plus particulièrement le copolymère de butadiène-styrène (SBR), les copolymères d'isoprène-butadiène (BIR), les copolymères d'isoprène et d'un monomère vinylaromatique, plus particulièrement le copolymère d'isoprène-styrène (SIR) et les copolymères d'isoprène-butadiène-styrène (SBIR).

L'élastomère diénique conventionnel peut être étoilé, couplé, fonctionnalisé ou non, de manière connue en soi, au moyen d'agents de fonctionnalisation, de couplage ou d'étoilage connus de l'homme de l'art.

Les compositions de caoutchouc peuvent comporter également tout ou partie des additifs usuels habituellement utilisés dans les compositions d'élastomères destinées à la fabrication de pneumatiques, comme par exemple des pigments, des agents de protection, des agents anti-fatigue, des plastifiants, des résines renforçantes, des donneurs de méthylène (par exemple HMT ou H3M), un système de réticulation et les mélanges de tels composés.

Dans le domaine des pneumatiques, notamment pour véhicules, l'utilisation d'une telle composition de caoutchouc est particulièrement appropriée. C'est pourquoi un pneumatique tel que défini dans la revendication 15 constitue également un objet de l'invention.

Les caractéristiques précitées de la présente invention, ainsi que d'autres, seront mieux comprises à la lecture de la description suivante de plusieurs exemples de réalisation de l'invention, donnés à titre illustratif et non limitatif.

### II. EXEMPLES DE REALISATION DE L'INVENTION

### II.1-Mesures utilisées :

### II.1.1-Résonance Magnétique Nucléaire (RMN) :

### Copolymères synthétisés en émulsion :

Les déterminations des taux des différentes unités monomères et de leurs microstructures au sein du copolymère sont réalisées par une analyse RMN. Les spectres sont acquis sur un spectromètre 500 MHz BRUKER équipé d'une sonde " large bande " BBIz-grad 5 mm. L'expérience RMN 1H quantitative, utilise une séquence simple impulsion 30° et un délai de répétition de 3 secondes entre chaque acquisition. Les échantillons sont solubilisés dans le chloroforme deutéré (CDCl3) ou le methanol deutéré (MeOD).

### Copolymères synthétisés en solution :

Les analyses RMN ¹H sont réalisées avec un Spectromètre Bruker Avance 300 (300 MHz), sonde QNP 1H, 31P, 19F et 13C. Les échantillons sont solubilisés dans le chloroforme deutéré (CDCl3).

### II.1.2-Chromatographie d'exclusion stérique (SEC) :

### Copolymères synthétisés en émulsion :

On utilise la chromatographie d'exclusion stérique ou SEC (Size Exclusion Chromatography). La SEC permet de séparer les macromolécules en solution suivant leur taille à travers des colonnes remplies d'un gel poreux. Les macromolécules sont séparées suivant leur volume hydrodynamique, les plus volumineuses étant éluées en premier. Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité ou polydispersité (Ip = Mw/Mn) calculé via un étalonnage dit de MOORE.

Préparation du polymère: Il n'y a pas de traitement particulier de l'échantillon de polymère avant analyse. Celui-ci est simplement solubilisé, dans du (tétrahydrofuranne + 1%vol. de diisopropylamine + 1%vol. de triéthylamine + 0,1%vol. d'eau distillée), à une concentration d'environ 1 g/l. Puis la solution est filtrée sur filtre de porosité 0,45µm avant injection.

Analyse SEC: L'appareillage utilisé est un chromatographe « WATERS alliance ». Le solvant d'élution est du tétrahydrofuranne + 1%vol. de diisopropylamine + 1%vol. de triéthylamine selon le solvant utilisé pour la mise en solution du polymère. Le débit est de 0,7 ml/min, la température du système de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ».

Le volume injecté de la solution de l'échantillon de polymère est 100 µl. Le détecteur est un réfractomètre différentiel « WATERS 2410 » et le logiciel d'exploitation des données chromatographiques est le système « WATERS EMPOWER».

Les masses molaires moyennes calculées sont relatives à une courbe d'étalonnage réalisée à partir de polystyrènes étalons commerciaux « PSS READY CAL-KIT ».

### Copolymères synthétisés en solution :

Les analyses GPC sont réalisée sur PL-GPC 50 VARIAN avec détecteur RI et système de colonne polypore. Débit : 1mL/min ; Solvant : THF ; Température 35°C.

### II.2-Préparation de polymères portant des fonctions époxyde pendantes :

### Exemple 1 : Copolymérisation radicalaire en solution isoprène/ méthacrylate de glycidyle (GMA) :

Dans un réacteur autoclave sont introduits sous un courant d'argon 30g de méthacrylate de glycidyle, 129g d'isoprène, 100g de toluène et 3,67g d'azobisisobutyronitrile (AIBN). Le mélange réactionnel est chauffé et agité à 70°C et pendant 1 nuit. En fin de polymérisation, le copolymère est précipité dans le méthanol. Le produit final est un polymère visqueux obtenu avec un rendement de 60%. Il est analysé en RMN 1H.

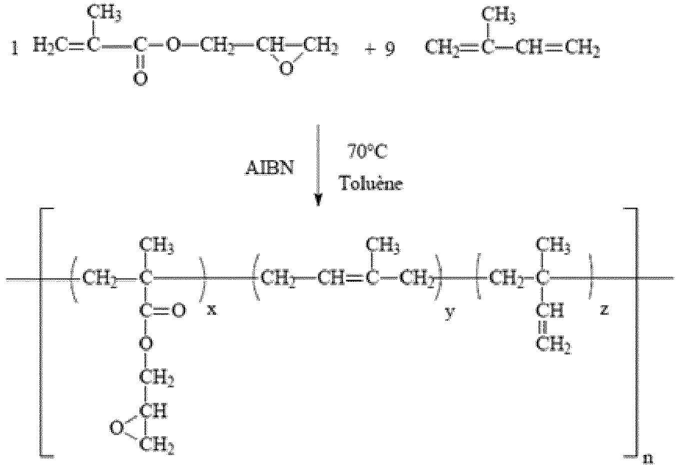

Le spectre RMN 1H permet de quantifier la microstructure au sein du copolymère par intégration des massifs de signaux caractéristiques des protons 1 à 5 qui apparaissent sous forme de massifs. La figure ci-dessous qui décrit les 3 motifs constitutifs du polymère indique les protons numérotés 1 à 5.

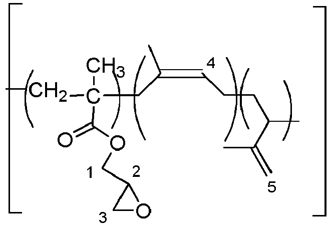

| Proton N° | Déplacement chimique (ppm) | Nombre de protons |
|---|---|---|
| H3 | 2.65 | 1 |
| H3 | 2.85 | 1 |
| H2 | 3.23 | 1 |
| H1 | 3.8-3.95 | 1 |
| H1 | 4.3-4.5 | 1 |
| H4 H5 | 4.65-5.35 | 3 |

La fonctionnalité du copolymère est déterminée par dosage RMN 1H avec étalon interne. Il y a 1,58 milliéquivalent (méq) de fonction époxyde par gramme de produit.

La masse molaire est évaluée par SEC avec un étalonnage polystyrène :
Mn = 6 000 g/mol; Mw = 16 900 g/mol; Ip = 2,8

Il y a donc environ 9,5 fonctions époxyde par chaîne. La composition du copolymère est la suivante : 12%mol de méthacrylate de glycidyle et 88%mol d'isoprène.

### Exemple 2 : Copolymérisation radicalaire en émulsion styrène/butadiène/GMA :

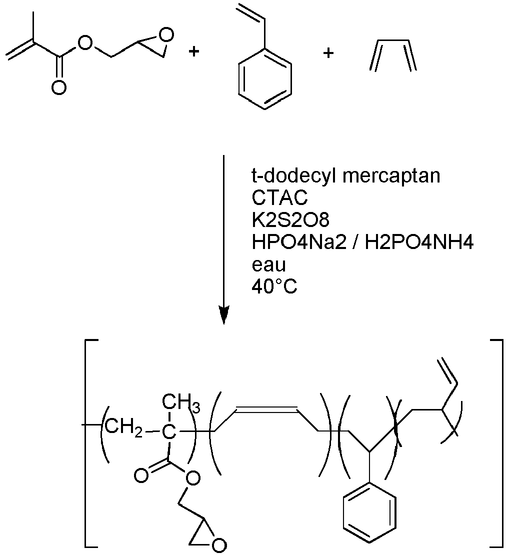

La polymérisation radicalaire en émulsion est effectuée dans une bouteille capsulée sous agitation modérée et sous atmosphère inerte d'azote.

Dans une bouteille sont introduits 0.120g de K₂S₂O₈ et 0.5g de chlorure d'hexadécyltriméthylammonium. La bouteille est capsulée puis barbotée à l'azote pendant 10 min. Sont ensuite introduits successivement dans la bouteille les composés et solutions suivants (ces solutions ayant été barbotées au préalable pour éliminer toute trace d'oxygène) :
- 90 mL d'eau
- 4.5 mL d'une solution de HPO₄Na₂ à 100g/L
- 1.9 mL d'une solution de H₂PO₄NH₄ à 100g/L
- 444 µL d'une solution à 0.7 mol/L de tert-dodécylmercaptan dans le styrène
- 2.1 mL de styrène
- 1.9 mL de méthacrylate de glycidyle
- 9.4mL de butadiène

Le milieu réactionnel est mis à agiter et chauffé à 40°C. La polymérisation est stoppée au bout de 60% de conversion par l'ajout de 1mL d'une solution de résorcinol à 100g/L dans l'eau.

Le copolymère est précipité dans un mélange acétone/méthanol (50/50 v/v).

Le copolymère est séché par étuvage sous vide (200 torr) à 50 °C pendant 1 jour.

Le copolymère est analysé en RMN 1H.

Le spectre RMN 1H permet de quantifier la microstructure au sein du copolymère par intégration des massifs de signaux caractéristiques des protons 1 à 12 qui apparaissent sous forme de massifs. La figure ci-dessous qui décrit les 3 motifs constitutifs du polymère indique les protons numérotés 1 à 12.

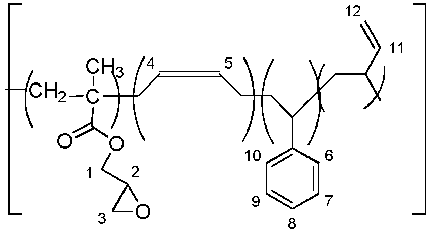

| Proton N° | Déplacement chimique (ppm) | Nombre de protons |
|---|---|---|
| H3 | 2.56-2.75 | 2 |
| H2 | 3.11 | 1 |
| H1 | 3.34-4.35 | 2 |
| H12 | 4.6-4.9 | 2 |
| H4 H5 H11 | 4.9-5.5 | 3 |
| H6 H7H8 H9 H10 | 6.8-7.2 | 5 |

La répartition des unités monomères du copolymère est donnée ci-dessous, celle des unités butadiène étant donnée selon les motifs 1,2 et 1,4 de la partie polybutadiène (respectivement PB1-2 et PB1-4) :

| | % molaire |
|---|---|
| % styrène | 11,5% +/-1.5 |
| % PB1-2 | 12% +/- 0.5 |
| % PB1-4 | 66%+/- 0.5 |
| % méthacrylate de glycidyle | 10,5%+/- 0.5 |

Le polymère est analysé en SEC : Mn = 47070 g/mol, Ip =1.86

### II.3-Préparation de polymères portant des groupements hydroxyaryle pendants :

### Exemple 3 :

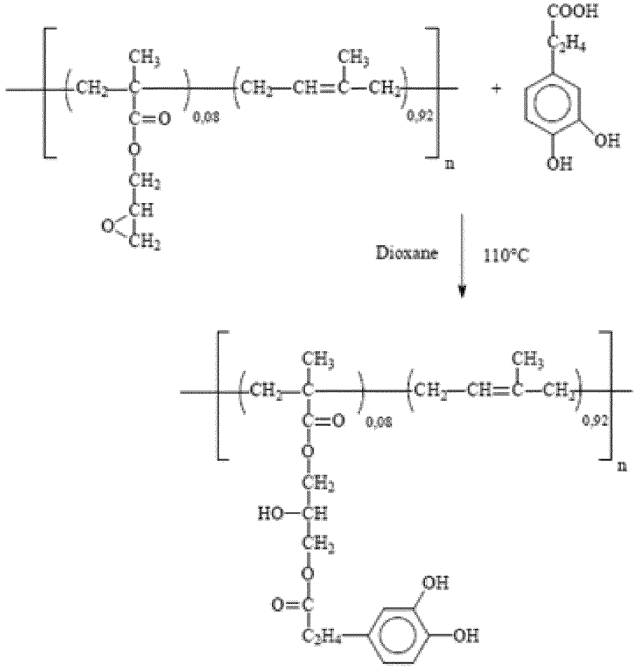

Dans un ballon tricol surmonté d'un réfrigérant, 50g de copolymère isoprène / méthacrylate de glycidyle issu de l'exemple 1 sont solubilisés dans 200mL de dioxane. 16.07g d'acide 3,4-dihydroxyhydrocinnamique sont ajoutés. Puis le milieu réactionnel est agité sous agitation mécanique et chauffée pendant 72h à 105°C sous atmosphère inerte. Le milieu réactionnel est ensuite laissé revenir à température ambiante sous atmosphère inerte, puis le polymère est coagulé dans l'eau, filtré, puis solubilisé à nouveau dans le dichlorométhane pour être séché sur Na₂SO₄. La solution est enfin évaporée à sec pour fournir un liquide visqueux avec un rendement de 95%.

### Le polymère fonctionnel est analysé en RMN 1H :

Le spectre RMN 1H permet de quantifier la microstructure au sein du copolymère par intégration des massifs de signaux caractéristiques des protons 1 à 8 qui apparaissent sous forme de massifs. La figure ci-dessous qui décrit les 3 motifs constitutifs du polymère indique les protons numérotés 1 à 8.

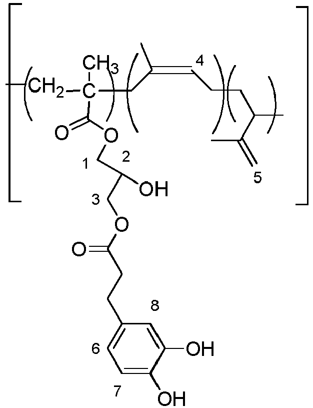

| Proton N° | Déplacement chimique (ppm) | Nombre de protons |
|---|---|---|
| H1, H2, H3 | 3.40-4.5 | 5 |
| H4 H5 | 4.6-5.4 | 3 |
| H6, H7, H8 | 6.4-6.9 | 3 |

La fonctionnalité du copolymère est déterminée par dosage RMN 1H avec étalon interne. Il y a 1,03 milliéquivalent de catéchol par gramme de produit.

La masse molaire est évaluée par SEC : Mn = 7800 g/mol ; Mw = 30800 g/mol ; Ip = 3,9

Il y a environ 8 fonctions catéchol par chaîne.

### Exemple 4 :

Dans un ballon tricol surmonté d'un réfrigérant, 1.5g de copolymère styrène / butadiène / méthacrylate de glycidyle issu de l'exemple 2 sont solubilisés dans 15mL de dioxane. 0.39g d'acide 3,4-dihydroxyhydrocinnamique (1 équivalent par rapport au nombre de moles de fonctions époxydes) sont ajoutés. Puis le milieu réactionnel est agité sous agitation mécanique et chauffée pendant 72h à 105°C sous atmosphère inerte.

Le milieu réactionnel est ensuite laissé revenir à température ambiante sous atmosphère inerte puis le polymère est coagulé dans l'eau et séché par étuvage sous vide (200 torr) à 60 °C pendant 1 jour.

Le polymère fonctionnel est analysé en RMN1H :
Le spectre RMN 1H permet de quantifier la microstructure au sein du copolymère par intégration des massifs de signaux caractéristiques des protons 1 à 15 qui apparaissent sous forme de massifs. La figure ci-dessous qui décrit les 3 motifs constitutifs du polymère indique les protons numérotés 1 à 15.

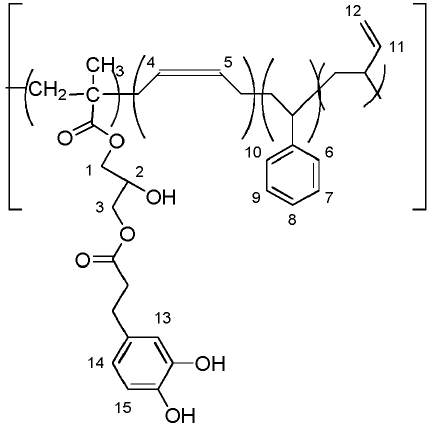

| Proton N° | Déplacement chimique (ppm) | Nombre de protons |
|---|---|---|
| H1, H2, H3 | 3.34-4.35 | 5 |
| H12 | 4.6-4.9 | 2 |
| H4 H5 H11 | 4.9-5.5 | 3 |
| H13, H14, H15 | 6.3-6.7 | 3 |
| H6 H7H8 H9 H10 | 6.8-7.2 | 5 |

La répartition des unités monomères du copolymère est donnée ci-dessous, celle des unités butadiène étant donnée selon les motifs 1,2 et 1,4 de la partie polybutadiène (respectivement PB1-2 et PB1-4) :

| | % molaire |
|---|---|
| % styrène | 11 +/- 1.5 |
| % PB1-2 | 14% +/- 0.5 |
| % PB1-4 | 64%+/- 0.5 |
| % méthacrylate de glycidyle ouvert avec l'acide 3,4-dihydroxyhydrocinnamique | 11%+/- 0.5 |

Le polymère est analysé en SEC : Mn = 40380 g/mol ; Ip =2.37

Qu'il s'agisse des exemples 3 ou 4, on note que les fonctions époxyde des groupements glycidyle présents sur le copolymère ont réagi quantitativement avec le composé nucléophile, l'acide 3,4-dihydroxyhydrocinnamique.

En résumé, on obtient un copolymère ayant des groupements hydroxyaryle pendants, avec un bon contrôle du nombre de groupements hydroxyaryle pendants, selon un procédé simple.

## Revendications

1. Procédé de synthèse d'un polymère portant au moins un groupement hydroxyaryle pendant, lequel procédé comprend la réaction d'un polymère de départ portant au moins une fonction époxyde pendante avec un composé nucléophile à la fois porteur du groupement hydroxyaryle et porteur d'une fonction nucléophile choisie dans le groupe constitué par la fonction amine primaire, la fonction amine secondaire, la fonction acide carboxylique et leur forme ionique,
le groupement hydroxyaryle étant un groupe aryle porteur de deux fonctions hydroxyle vicinales directement liées au noyau benzénique,
le composé nucléophile répondant à la formule (I) suivante:
A-B-X (I)
dans laquelle:
A représente la fonction nucléophile choisie dans le groupe constitué par la fonction amine primaire, la fonction amine secondaire, la fonction acide carboxylique et leur forme ionique,
B est un "espaceur" représentant un atome ou un groupe d'atomes formant une liaison entre A et X,
X représente
X- = 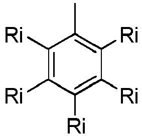 dans laquelle les Ri, identiques ou différents, représentent un atome d'hydrogène ou une fonction hydroxyle, deux Ri représentant une fonction hydroxyle.

2. Procédé selon la revendication 1, dans lequel, A représente la fonction acide carboxylique ou sa forme ionique dans la formule (I).

3. Procédé selon l'une quelconque des revendications 1 à 2, dans lequel l'une quelconque des conditions suivantes est remplie dans la formule (I) :
• A représente la fonction acide carboxylique ou sa forme ionique,
• B représente un groupement hydrocarboné divalent en C₁-C₆,
• X représente un groupement aryle substitué sur deux atomes de carbone voisins par deux fonctions hydroxyle.

4. Procédé selon quelconque des revendications 1 à 3, dans lequel X- représente dans la formule (I) :

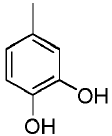

5. Procédé selon l'une quelconque des revendications 1 à 4, dans lequel le composé nucléophile répond à la formule :

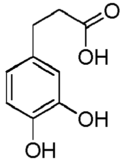

6. Procédé selon l'une quelconque des revendications 1 à 5, dans lequel le polymère de départ est un polymère d'au moins un premier monomère portant la fonction époxyde.

7. Procédé selon l'une quelconque des revendications 1 à 6, dans lequel le polymère de départ est un polymère d'au moins un premier monomère portant la fonction époxyde et d'au moins un second monomère, de préférence un monomère vinylique choisi parmi :
- l'éthylène,
- les α-oléfines,
- le (méth)acrylonitrile,
- les (méth)acrylates,
- les ester vinyliques d'acides carboxyliques,
- l'alcool vinylique,
- les éthers vinyliques,
- et les mélanges de ces monomères.

8. Procédé selon la revendication 7, dans lequel le second monomère est l'éthylène ou une α-monooléfine, un diène conjugué ou un diène non-conjugué.

9. Procédé selon la revendication 8, dans lequel le second monomère est le 1,3-butadiène, l'isoprène ou leur mélange ou le styrène.

10. Procédé selon l'une quelconque des revendications 1 à 9, dans lequel le polymère de départ est un polymère d'au moins un premier monomère portant la fonction époxyde, d'éthylène ou d'une α-oléfine et d'un troisième monomère, lequel troisième monomère est un monomère vinylique défini selon la revendication 7.

11. Procédé selon l'une quelconque des revendications 6 à 10, dans lequel le premier monomère portant la fonction époxyde porte une fonction époxyde, de préférence un groupement glycidyle, de manière plus préférentielle un ester de glycidyle d'un acide carboxylique α,β-insaturé, encore plus préférentiellement le méthacrylate de glycidyle, l'acrylate de glycidyle ou l'itaconate de glycidyle.

12. Procédé selon l'une quelconque des revendications 1 à 5, dans lequel le polymère de départ est obtenu par modification post-polymérisation d'un polymère insaturé avec un composé époxydé.

13. Procédé selon la revendication 12, dans lequel le polymère insaturé est l'un des élastomères diéniques (a) à (e):
(a) un homopolymère d'un monomère diène conjugué ayant de 4 à 12 atomes de carbone,
(b) un copolymère d'un monomère diène conjugué ayant de 4 à 12 atomes de carbone,
(c) un homopolymère d'un monomère diène non conjugué ayant de 5 à 12 atomes de carbone
(d) un copolymère d'un monomère diène non conjugué ayant de 5 à 12 atomes de carbone;
(e) un mélange des polymères définis en (a) à (d).

14. Procédé selon l'une quelconque des revendications 12 à 13 dans lequel le polymère insaturé est un élastomère diénique choisi dans le groupe constitué par les polybutadiènes, les polyisoprènes, les copolymères de butadiène, les copolymères d'isoprène et leurs mélanges.

15. Pneumatique dont un de ses éléments constitutifs comprend une composition de caoutchouc, laquelle composition de caoutchouc est à base d'au moins une charge renforçante et un polymère susceptible d'être obtenu par le procédé défini à l'une quelconque des revendications 1 à 14.

## Patentansprüche

1. Verfahren zur Synthese eines Polymers mit mindestens einer seitenständigen Hydroxyarylgruppe, bei dem man ein Ausgangspolymer mit mindestens einer Epoxidfunktion mit einer nucleophilen Verbindung, die gleichzeitig die Hydroxyarylgruppe und eine nucleophile Funktion aus der Gruppe bestehend aus der primären Aminfunktion, der sekundären Aminfunktion, der Carbonsäurefunktion und ihrer ionischen Form trägt, umsetzt,
wobei es sich bei der Hydroxyarylgruppe um eine Arylgruppe mit zwei direkt an den Benzolkern gebundenen vicinalen Hydroxylfunktionen handelt, wobei die nucleophile Verbindung der folgenden Formel (I) entspricht:
A-B-X (I)
in der:
A für eine nucleophile Funktion aus der Gruppe bestehend aus der primären Aminfunktion, der sekundären Aminfunktion, der Carbonsäurefunktion und ihrer ionischen Form steht,
B ein "Spacer" ist, der für ein Atom oder eine Gruppe von Atomen, das bzw. die eine Bindung zwischen A und X bildet, steht,
X für
X- = 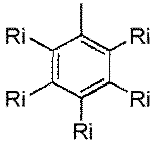 steht, wobei die Variablen Ri gleich oder verschieden sind und für ein Wasserstoffatom oder eine Hydroxylfunktion stehen, wobei zwei Ri für eine Hydroxylfunktion stehen.

2. Verfahren nach Anspruch 1, bei dem A in Formel (I) für die Carbonsäurefunktion oder ihre ionische Form steht.

3. Verfahren nach einem der Ansprüche 1 bis 2, wobei in der Formel (I) eine der folgenden Bedingungen erfüllt ist:
• A steht für die Carbonsäurefunktion oder ihre ionische Form,
• B steht für eine zweiwertige C₁-C₆-Kohlenwasserstoffgruppe,
• X steht für eine Arylgruppe, die an zwei benachbarten Kohlenstoffatomen durch zwei Hydroxylfunktionen substituiert ist.

4. Verfahren nach einem der Ansprüche 1 bis 3, bei dem X- in der Formel (I) für 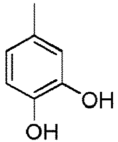 steht.

5. Verfahren nach einem der Ansprüche 1 bis 4, bei dem die nucleophile Verbindung der Formel 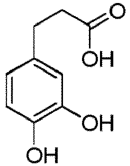 entspricht.

6. Verfahren nach einem der Ansprüche 1 bis 5, bei dem es sich bei dem Ausgangspolymer um ein Polymer von mindestens einem ersten Monomer, das die Epoxidfunktion trägt, handelt.

7. Verfahren nach einem der Ansprüche 1 bis 6, bei dem es sich bei dem Ausgangspolymer um ein Polymer von mindestens einem ersten Monomer, das die Epoxidfunktion trägt, und einem zweiten Monomer, vorzugsweise einem Vinylmonomer, das aus
- Ethylen,
- α-Olefinen,
- (Meth)acrylnitril,
- (Meth)acrylaten,
- Vinylestern von Carbonsäuren,
- Vinylalkohol,
- Vinylethern
- und Mischungen dieser Monomere
ausgewählt ist, handelt.

8. Verfahren nach Anspruch 7, bei dem es sich bei dem zweiten Monomer um Ethylen oder ein α-Monoolefin, ein konjugiertes Dien oder ein nichtkonjugiertes Dien handelt.

9. Verfahren nach Anspruch 8, bei dem es sich bei dem zweiten Monomer um 1,3-Butadien, Isopren oder eine Mischung davon oder Styrol handelt.

10. Verfahren nach einem der Ansprüche 1 bis 9, bei dem es sich bei dem Ausgangsmonomer um ein Polymer von mindestens einem ersten Monomer, das die Epoxidfunktion trägt, Ethylen oder einem α-Olefin und einem dritten Monomer handelt, wobei es sich bei dem dritten Monomer um ein Vinylmonomer gemäß Anspruch 7 handelt.

11. Verfahren nach einem der Ansprüche 6 bis 10, bei dem das erste Monomer, das die Epoxidfunktion trägt, eine Epoxidfunktion, vorzugsweise eine Glycidylgruppe, weiter bevorzugt einen Glycidylester einer α,β-ungesättigten Carbonsäure, noch weiter bevorzugt Glycidylmethacrylat, Glycidylacrylat oder Glycidylitaconat, trägt.

12. Verfahren nach einem der Ansprüche 1 bis 5, bei dem das Ausgangspolymer durch nach der Polymerisation durchgeführte Modifizierung eines ungesättigten Polymers mit einer Epoxidverbindung erhalten wird.

13. Verfahren nach Anspruch 12, bei dem es sich bei dem ungesättigten Polymer um eines der Dienelastomere (a) bis (e) handelt:
(a) ein Homopolymer eines konjugierten Dienmonomers mit 4 bis 12 Kohlenstoffatomen,
(b) ein Copolymer eines konjugierten Dienmonomers mit 4 bis 12 Kohlenstoffatomen,
(c) ein Homopolymer eines nichtkonjugierten Dienmonomers mit 5 bis 12 Kohlenstoffatomen,
(d) ein Copolymer eines nichtkonjugierten Dienmonomers mit 5 bis 12 Kohlenstoffatomen;
(e) eine Mischung der in (a) bis (d) definierten Polymere.

14. Verfahren nach einem der Ansprüche 12 bis 13, bei dem es sich bei dem ungesättigten Polymer um ein Dienelastomer aus der Gruppe bestehend aus Polybutadienen, Polyisoprenen, Butadien-Copolymeren, Isopren-Copolymeren und Mischungen davon handelt.

15. Reifen, wobei eines seiner Aufbauelemente eine Kautschukzusammensetzung auf Basis von mindestens einem verstärkenden Füllstoff und einem Polymer erhältlich durch das Verfahren gemäß einem der Ansprüche 1 bis 14 umfasst.

## Claims

1. Process for the synthesis of a polymer bearing at least one pendant hydroxyaryl group, which process comprises the reaction of a starting polymer bearing at least one pendant epoxide functional group with a nucleophilic compound simultaneously bearing the hydroxyaryl group and bearing a nucleophilic functional group selected from the group consisting of the primary amine functional group, the secondary amine functional group, the carboxylic acid functional group and their ionic form,
the hydroxyaryl group being an aryl group which bears two hydroxyl vicinal functional groups directly bonded to the benzene ring,
the nucleophilic compound corresponding to the following formula (I):
A-B-X (I)
in which:
A represents the nucleophilic functional group selected from the group consisting of the primary amine functional group, the secondary amine functional group, the carboxylic acid functional group and their ionic form,
B is a "spacer" representing an atom or a group of atoms forming a connection between A and X,
X represents
X- = 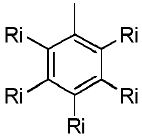 in which the Ri groups, which are identical or different, represent a hydrogen atom or a hydroxyl functional group, two Ri groups representing a hydroxyl functional group.

2. Process according to Claim 1, in which A represents the carboxylic acid functional group or its ionic form in the formula (I).

3. Process according to any one of Claims 1 to 2, in which any one of the following conditions is met in the formula (I):
• A represents the carboxylic acid functional group or its ionic form,
• B represents a divalent C₁-C₆ hydrocarbon group,
• X represents an aryl group substituted on two neighbouring carbon atoms by two hydroxyl functional groups.

4. Process according to any one of Claims 1 to 3, in which X represents, in the formula (I):

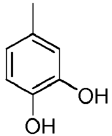

5. Polymer according to any one of Claims 1 to 4, in which the nucleophilic compound corresponds to the formula:

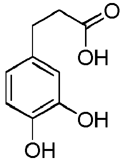

6. Process according to any one of Claims 1 to 5, in which the starting polymer is a polymer of at least one first monomer bearing the epoxide functional group.

7. Process according to any one of Claims 1 to 6, in which the starting polymer is a polymer of at least one first monomer bearing the epoxide functional group and of at least one second monomer, preferably a vinyl monomer selected from:
- ethylene,
- α-olefins,
- (meth)acrylonitrile,
- (meth)acrylates,
- vinyl esters of carboxylic acids,
- vinyl alcohol,
- vinyl ethers,
- and the mixtures of these monomers.

8. Process according to Claim 7, in which the second monomer is ethylene, an α-monoolefin, a conjugated diene or a non-conjugated diene.

9. Process according to Claim 8, in which the second monomer is 1,3-butadiene, isoprene or their mixture or styrene.

10. Process according to any one of Claims 1 to 9, in which the starting polymer is a polymer of at least one first monomer bearing the epoxide functional group, of ethylene or of an α-olefin and of a third monomer, which third monomer is a vinyl monomer defined according to Claim 7.

11. Process according to any one of Claims 9 to 16, in which the first monomer bearing the epoxide functional group bears an epoxide functional group, preferably a glycidyl group, more preferably a glycidyl ester of an α,β-unsaturated carboxylic acid, even more preferably glycidyl methacrylate, glycidyl acrylate or glycidyl itaconate.

12. Process according to any one of Claims 1 to 5, in which the starting polymer is obtained by postpolymerization modification of an unsaturated polymer with an epoxidized compound.

13. Process according to Claim 12, in which the unsaturated polymer is one of the diene elastomers (a) to (e):
(a) a homopolymer of a conjugated diene monomer having from 4 to 12 carbon atoms,
(b) a copolymer of a conjugated diene monomer having from 4 to 12 carbon atoms,
(c) a homopolymer of a non-conjugated diene monomer having from 5 to 12 carbon atoms,
(d) a copolymer of a non-conjugated diene monomer having from 5 to 12 carbon atoms,
(e) a mixture of the polymers defined in (a) to (d).

14. Process according to either one of Claims 12 and 13, in which the unsaturated polymer is a diene elastomer selected from the group consisting of polybutadienes, polyisoprenes, butadiene copolymers, isoprene copolymers and their mixtures.

15. Tyre, one of the constituent elements of which comprises a rubber composition based on at least one reinforcing filler and a polymer obtainable by the process defined according to any one of Claims 1 to 14.
